Europäisches Patentamt

(19) European Patent Office

Office européen des brevets

(11) **EP 0 744 378 B1**

## (12) FASCICULE DE BREVET EUROPEEN

(45) Date de publication et mention
de la délivrance du brevet:
**14.07.1999 Bulletin 1999/28**

(51) Int. Cl.$^6$: **C01F 7/00**, C02F 1/52

(21) Numéro de dépôt: **96401066.4**

(22) Date de dépôt: **15.05.1996**

(54) **Nouveaux polychlorures ou polychlorosulfates d'aluminium, leur procédé de préparation et leur application au traitement des milieux aqueux**

Neues Polychlorid oder Polychlorosulfat von Aluminium, Verfahren zu ihrer Herstellung und ihre Verwendung in Wasserbehandlung

New polychloride or polychlorosulfate of aluminium, process for its preparation and its use for the treatment of water

(84) Etats contractants désignés:
**AT BE CH DE DK ES FI FR GB GR IE IT LI LU MC NL PT SE**

(30) Priorité: **24.05.1995 FR 9506188**

(43) Date de publication de la demande:
**27.11.1996 Bulletin 1996/48**

(73) Titulaire: **RHODIA CHIMIE**
**92408 Courbevoie Cédex (FR)**

(72) Inventeurs:
• **Chane-Ching, Jean-Yves**
**95600 Eaubonne (FR)**
• **Pescher, Yvette**
**92220 Bagneux (FR)**

• **Lachery, Nathalie,**
**1, Square Hector Berlioz**
**FR-62100 Compiegne (FR)**

(74) Mandataire: **Delenne, Marc et al**
**RHODIA SERVICES**
**Direction de la Propriété Industrielle**
**25, quai Paul Doumer**
**92408 Courbevoie Cédex (FR)**

(56) Documents cités:
EP-A- 0 557 153          DE-A- 4 124 171
FR-A- 2 317 227          FR-A- 2 584 699

• **DATABASE WPI Week 7808 Derwent Publications Ltd., London, GB; AN 14724A XP002013043 "Basic aluminum chloride production." & JP-A-53 001 699 (TOYO SODA) , 9 Janvier 1978**

## Description

La présente invention conceme un nouveau polychlorure ou polychlorosulfate d'aluminium, utilisable dans le traitement de milieux aqueux, et son procédé de préparation.

Elle est également relative à son application au traitement des milieux aqueux, notamment des eaux, en particulier des eaux potables, et des effluents aqueux.

Il est connu d'employer divers agents lors du traitement des eaux, notamment des eaux résiduaires, des eaux usées, des eaux potables.

On peut ainsi citer le chlorure ferreux ou ferrique, le sulfate ferreux ou ferrique, le chlorosulfate ferrique.

On peut également utiliser des polychlorures ou des polychlorosulfates d'aluminium, présentant une haute basicité, en raison notamment de leur bonne propriété de floculation et de coagulation.

De tels composés ont déjà fait l'objet de nombreuses publications, comme par exemple les demandes de brevet FR-A-2036685, 2534897, 2584699, EP-A-0218487, JP52113384 ou 53001699.

Certains de ces composés présentent l'inconvénient de ne pas posséder une basicité assez élevée, qui est en particulier requise pour certaines applications telles que le traitement des eaux potables.

Certains affichent une stabilité dans le temps au stockage très moyenne, voire faible.

De plus, l'efficacité même de ces composés au niveau de l'épuration du milieu, notamment des eaux potables, à traiter n'est pas toujours entièrement satisfaisante.

La présente invention a notamment pour but d'obvier aux inconvénients mentionnés ci-dessus, et de foumir ainsi un composé utilisable efficacement dans le traitement des milieux aqueux, en particulier des eaux potables, et présentant une basicité élevée et une bonne stabilité dans le temps (notamment vis-à-vis de la décantation).

Dans ce but, et cela constitue l'objet principal de l'invention, celle-ci propose un polychlorure ou polychlorosulfate d'aluminium répondant à la formule (1) suivante :

$$Al(OH)_x Cl_y (SO_4)_z M_t \qquad (1)$$

formule (1) dans laquelle :

M représente un métal alcalino-terreux ou alcalin,
x, y, z et t sont des nombres réels tels que :
$1,80 \leq x \leq 2,30$,
$0 \leq z \leq 0,050$,
$0,200 \leq t \leq 0,515$, et
$x + y + 2z = 3 + 2t$ si M représente un métal alcalino-terreux ou $x + y + 2z = 3 + t$ si M représente un métal alcalin,

le spectre RMN de l'aluminium $^{27}Al$ dudit polychlorure ou polychlorosulfate contenant un signal (ou une raie) à environ $\delta = -6$ ppm.

Si M peut être un métal alcalin, par exemple le sodium ou le potassium, M représente, de manière préférée, un métal alcalino-terreux, tel que, par exemple, le calcium, le magnésium.

De manière avantageuse, M représente le calcium. Le produit selon l'invention est alors particulièrement efficace pour l'abattement des matières organiques contenues dans les eaux potables.

De préférence, le nombre x est tel que $1,90 \leq x \leq 2,25$, en particulier $2,0 \leq x \leq 2,2$.

De même, le nombre t est de préférence tel que $0,300 \leq t \leq 0,500$, en particulier $0,400 \leq t \leq 0,495$ ; t peut être notamment compris entre 0,450 et 0,490.

Selon un mode particulier de réalisation de l'invention, le composé selon l'invention est un polychlorure d'aluminium de formule (1) dans laquelle z = 0.

Selon un autre mode particulier de réalisation de rinvention, le composé selon l'invention est un polychlorosulfate d'aluminium de formule (1) dans laquelle $0 < z \leq 0,50$, de préférence $0,020 \leq z \leq 0,045$, en particulier $0,025 \leq z \leq 0,040$ ; z peut être notamment compris entre 0,030 et 0,038.

Les polychlorures ou polychlorosulfates d'aluminium selon l'invention présentent avantageusement une basicité élevée ; cette basicité est de préférence supérieure à 63 % ; elle est, de manière encore plus préférée, d'au moins 70 %.

Ils sont préférentiellement solubles dans l'eau.

Une caractéristique du produit selon l'invention réside dans la présence d'un signal (ou d'une raie ou bande) à environ $\delta = -6$ ppm dans son spectre RMN de l'aluminium $^{27}Al$.

La présence de ce déplacement chimique, qui n'est pas référencé dans la littérature, peut être attribuée à la présence d'une espèce (a priori polymérique) particulière de l'aluminium.

Cette espèce particulière de l'aluminium représente, de préférence, au moins 15 %, en particulier de 15 à 25 %, en poids de l'aluminium du produit selon l'invention.

En plus du signal très spécifique mentionné précédemment, le spectre RMN de l'aluminium $^{27}Al$ du produit selon l'invention présente, de manière générale, un pic attribuable à l'aluminium sous forme monomère (pic fin $\delta$ environ à = 0 ppm) et deux pics attribuables aux espèces aluminium dimère et polymère octaédrique (pics larges à environ $\delta = 3\text{-}5$ ppm et environ $\delta = 10$ ppm).

Aucune espèce aluminium polymère tétraédrique n'est habituellement observée par RMN de l'aluminium $^{27}Al$ du composé selon l'invention.

Le composé selon l'invention possède généralement une très forte proportion molaire d'aluminium sous forme Al-13.

Ainsi, selon un mode de réalisation très préféré de l'invention, le polychlorure ou polychlorosulfate d'aluminium de formule (1) présente, après aucun vieillissement, une proportion molaire d'aluminium sous forme Al-13, pour une concentration en aluminium de 0,06 mol/l, d'au moins 25 %, de préférence d'au moins 30 %.

De préférence, le polychlorure ou polychlorosulfate d'aluminium selon l'invention est tel qu'il présente, après un vieillissement de 150 heures, voire de 200 heures, une proportion molaire d'aluminium sous forme Al-13, pour une concentration en aluminium de 0,06 mol/l, d'au moins 50 %, en particulier d'au moins 60 %, par exemple d'au moins 65 %.

Le dosage de l'aluminium sous forme Al-13 est effectué par RMN de l'aluminium $^{27}$Al, comme décrit dans l'exemple 11 de la demande de brevet EP-A-0557153. Les conditions opératoires sont ainsi les suivantes :

| solution de référence | AlCl$_3$ 0,5 M |
|---|---|
| tuning 9966,5 | accord de sonde |
| matching 970 | accord de sonde |
| SF 52,147 MHz | fréquence de résonance d'Al |
| SW = 15626 Hz | gamme de fréquence observée correspondant à la gamme 150 à -150 ppm par rapport à AlCl$_3$ (0 ppm) |
| QI = 1361 Hz | porteuse en fréquence |
| SI = TD = 8K | taille des FID et spectres (en Kmots) |
| QN = AP | type de détection |
| PW = 11 μs | durée de l'impulsion (PW 90° = 13) |
| RD = 1 s | délai interimpulsions |

Le polychlorure ou polychlorosulfate d'aluminium selon l'invention présente, en général, une teneur pondérale en aluminium, exprimée en Al$_2$O$_3$, comprise entre 5 et 20 %, de préférence entre 5 et 15 %.

Il est à noter que le produit selon l'invention peut être employé tel quel ou, de préférence, sous forme d'une solution. Dans ce dernier cas, le solvant choisi est plus particulièrement l'eau.

Un autre objet de l'invention réside dans le procédé de préparation des polychlorures ou polychlorosulfates d'aluminium selon l'invention.

Ce procédé est du type comprenant la réaction, à une température inférieure à 40 C, d'un composé d'un métal alcalino-terreux ou alcalin M avec un polychlorure ou polychlorosulfate d'aluminium répondant à la formule (2) suivante :

$$Al(OH)_u Cl_v (SO_4)_w \qquad (2)$$

formule (2) dans laquelle u, v et w sont des nombres réels tels que :

$0,85 \leq u \leq 1,50,$
$0 \leq w \leq 0,06,$ et

$u + v + 2w = 3$ .

En général, la proportion M/Al, calculée en équivalents moléculaires (ledit rapport est exprimé en moles, ramené à la forme métal), est telle que :

$0,10 \leq M/Al \leq 0,60$, de préférence $0,200 \leq M/Al \leq 0,515$, si M représente un métal alcalino-terreux,
$0,20 \leq M/Al \leq 1,20$, de préférence $0,40 \leq M/Al \leq 1,03$, si M représente un métal alcalin.

Selon une caractéristique essentielle du procédé selon l'invention, la réaction est effectuée à une température inférieure à 40 °C ; celle-ci est de préférence d'au plus 35 °C, en particulier d'au plus 30 °C. Elle peut être comprise entre 15 et 30 °C et, de manière souvent avantageuse, entre 18 et 25 °C.

La réaction est habituellement mise en oeuvre sous agitation.

Préalablement à la réaction avec le composé de métal alcalino-terreux ou alcalin M, le polychlorure ou polychlorosulfate d'aluminium de formule (2) est mélangé à de l'eau (par exemple de l'eau déminéralisée).

Le composé de métal alcalino-terreux ou alcalin M est habituellement ajouté au polychlorure ou polychlorosulfate d'aluminium de formule (2) pendant une durée comprise entre 10 minutes et 2 heures, de préférence entre 15 et 40 minutes ; celle-ci varie par exemple entre 15 et 30 minutes.

De manière générale, après l'addition du composé de métal alcalino-terreux ou alcalin M au composé de formule (2), on laisse mûrir, sous agitation, le produit obtenu, pendant une durée comprise entre 2 et 8 heures, de préférence entre 3 et 5 heures.

Le procédé selon l'invention peut comprendre une étape finale de filtration, effectuée au moyen de tout dispositif de filtration adéquat bien connu de l'homme de métier.

Si M peut être un métal alcalin, par exemple le sodium ou le potassium, M représente, de manière préférée, un métal alcalino-terreux, tel que, par exemple, le calcium, le magnésium.

De manière avantageuse, M représente le calcium.

On peut utiliser un composé basique de métal alcalino-terreux ou alcalin M (notamment hydroxyde, carbonate, bicarbonate). Néanmoins, on utilise de préférence un carbonate tel que, par exemple, Na$_2$CO$_3$ ou, de manière avantageuse, CaCO$_3$.

Même si celui-ci peut éventuellement être employé sous forme d'une suspension (ou slurry), on obtient des résultats particulièrement bons lorsqu'il est utilisé sous forme solide (poudre en particulier).

Le polychlorure ou polychlorosulfate d'aluminium de formule (2) présente une basicité relativement faible ; elle est le plus souvent comprise entre 30 et 50 %, en particulier entre 35 et 50 %, par exemple entre 40 et 50 %.

Il possède généralement une teneur pondérale en aluminium, exprimée en $Al_2O_3$, comprise entre 10 et 25 %, de préférence entre 10 et 20 %.

Dans la formule (2), le nombre u est de préférence tel que $0,9 \leq u \leq 1,4$, en particulier $1,05 \leq u \leq 1,4$.

Selon un mode particulier de réalisation du procédé de l'invention, le composé de formule (2) est un polychlorure d'aluminium de formule (2) dans laquelle w = 0.

Selon un autre mode particulier de réalisation du procédé de l'invention, le composé de formule (2) est un polychlorosulfate d'aluminium de formule (2) dans laquelle $0 < w \leq 0,06$, de préférence $0,020 \leq w \leq 0,045$.

Il est à noter que le composé de formule (2) peut être employé tel quel ou, de préférence, sous forme d'une solution.

Dans ce dernier cas, le solvant choisi est plus particulièrement l'eau.

Les polychlorures ou polychlorosulfates d'aluminium de formule (2) sont des composés bien connus de l'homme du métier, de même que leur mode de synthèse ; ils peuvent être en particulier trouvés dans le commerce.

Comme composés de formule (2), on peut notamment cités ceux obtenus par les procédés décrits dans les demandes de brevet FR-A-2036685 (réaction entre de l'acide sulfurique et un chlorure basique d'aluminium, entre 60 et 120 °C) et FR-A-2534897 (réaction entre un sulfate basique d'aluminium et un chlorure basique d'aluminium, entre 80 et 120 °C).

Les composés de formule (2) peuvent être préparés par réaction d'acide chlorhydrique (et éventuellement d'acide sulfurique) sur de l'hydroxyde d'aluminium, les proportions desdits réactifs étant déterminés de façon à obtenir un composé répondant à la formule (2).

De manière très avantageuse, le polychlorure ou polychlorosulfate d'aluminium de formule (2) est obtenu par un procédé dans lequel on n'utilise pas de composé de métal alcalino-terreux ou alcalin, en particulier de composé du calcium, tel que $CaCO_3$.

En effet, il a été notamment constaté que l'utilisation de $CaCO_3$ à ce stade-là conduisait en général à des produits finaux peu stables et/ou de basicité pas très élevée.

Les polychlorures ou polychlorosulfates selon l'invention ou préparés par le procédé de l'invention peuvent être utilisés pour le traitement de milieux aqueux, notamment d'eaux diverses et d'effluents aqueux.

Ce traitement peut être réalisé selon les méthodes classiquement mises en oeuvre dans ce domaine.

Ces produits trouvent une application particulièrement intéressante dans le traitement des eaux potables. Ils sont efficaces notamment pour l'abattement (ou élimination) de la turbidité et, en particulier lorsqu'ils contiennent du calcium, pour l'abattement (ou élimination) des matières organiques de ces eaux potables. Ils présentent avantageusement une bonne stabilité dans le temps au stockage.

L'exemple suivant illustre l'invention sans toutefois en limiter la portée.

## EXEMPLE

1000 grammes d'une solution de polychlorosulfate d'aluminium de formule

$$Al(OH)_{1,10}Cl_{1,82}(SO_4)_{0,04}$$

présentant une teneur pondérale en aluminium, exprimée en $Al_2O_3$, de 17,2 % et une basicité d'environ 37 %, sont introduits dans un réacteur de 1 litre, à double enveloppe, équipée d'un système d'agitation mécanique.

On y ajoute ensuite 621 grammes d'eau déminéralisée et la solution obtenue est homogénéisée par agitation.

On veille à ce que la température du milieu réactionnel ne dépasse pas 25 °C tout au long du procédé.

169 grammes de $CaCO_3$ sont ajoutés, sur une période de 30 minutes, dans la solution maintenue sous agitation.

On laisse ensuite la solution obtenue sous agitation pendant 4 heures (à 150 tours/min).

Puis la suspension est recueillie par soutirage et filtrée sur un filtre de porosité 3.

On recueille ainsi 28 grammes de précipité solide et 1250 grammes d'une solution de polychlorosulfate d'aluminium répondant à la formule

$$Al(OH)_{2,1}Cl_{1,82}(SO_4)_{0,035}Ca_{0,495}$$

et présentant une teneur pondérale en aluminium, exprimée en $Al_2O_3$, de 10,0 % et une basicité de 70 %.

Son spectre RMN de l'aluminium $^{27}$Al contient:

- une raie à $\delta$ = -6 ppm, attribuable à une espèce particulière de l'aluminium, qui représente 22 % en poids de l'aluminium présent;

- une raie fine à $\delta$ = 0 ppm attribuable à l'aluminium sous forme monomère, qui représente 23 % en poids de l'aluminium présent;

- une raie large à $\delta$ = 3-5 ppm et une raie très large à $\delta$ = 10 ppm, attribuables respectivement à l'aluminium sous forme dimère et à l'aluminium sous forme polymère octaédrique, qui représentent 55 % en poids de l'aluminium présent.

Le polychlorosulfate d'aluminium obtenu présente, sans vieillissement, une proportion molaire d'aluminium sous forme Al-13, pour une concentration en aluminium de 0,06 mol/l, de 33 %.

Après un vieillissement de 150 heures et après un vieillissement de 200 heures, cette proportion est de 69 %.

Le dosage de l'aluminium sous forme Al-13 est effectué par RMN de l'aluminium $^{27}$Al comme mentionné plus haut.

## Revendications

1. Polychlorure ou polychlorosulfate d'aluminium répondant à la formule (1) suivante

$$Al(OH)_xCl_y(SO_4)_zM_t \qquad (1)$$

formule (1) dans laquelle :

M représente un métal alcalino-terreux ou alcalin,
x, y, z et t sont des nombres réels tels que :
$1,80 \leq x \leq 2,30$,
$0 \leq z \leq 0,050$,
$0,200 \leq t \leq 0,515$, et
$x + y + 2z = 3 + 2t$ si M représente un métal alcalino-terreux ou $x + y + 2z = 3 + t$ si M représente un métal alcalin,

le spectre RMN de l'aluminium $^{27}$Al dudit polychlorure ou polychlorosulfate contenant un signal à environ $\delta$ = -6 ppm.

2. Polychlorure ou polychlorosulfate d'aluminium selon la revendication 1, caractérisé en ce qu'il présente, sans vieillissement, une proportion molaire d'aluminium sous forme Al-13, pour une concentration en aluminium de 0,06 mol/l, d'au moins 25 %, de préférence d'au moins 30 %.

3. Polychlorure ou polychlorosulfate d'aluminium selon l'une des revendications 1 et 2, caractérisé en ce qu'il présente, après vieillissement de 150 heures, une proportion molaire d'aluminium sous forme Al-13, pour une concentration en aluminium de 0,06 mol/l, d'au moins 50 %, de préférence d'au moins 60 %.

4. Polychlorure ou polychlorosulfate d'aluminium selon l'une des revendications 1 à 3, caractérisé en ce qu'il présente une basicité supérieure à 63 %, de préférence d'au moins 70 %.

5. Polychlorure ou polychlorosulfate d'aluminium selon l'une des revendications 1 à 4, caractérisé en ce qu'il présente une teneur pondérale en aluminium, exprimée en $Al_2O_3$, comprise entre 5 et 20 %, en particulier entre 5 et 15 %.

6. Polychlorure ou polychlorosulfate d'aluminium selon l'une des revendications 1 à 5, caractérisé en ce qu'il est sous forme d'une solution, le solvant étant de préférence de l'eau.

7. Polychlorure ou polychlorosulfate d'aluminium selon l'une des revendications 1 à 6, caractérisé en ce que M représente un métal alcalino-terreux, de préférence le calcium.

8. Polychlorure ou polychlorosulfate d'aluminium selon l'une des revendications 1 à 7, caractérisé en ce que, dans la formule (1), x est tel que $1,90 \leq x \leq 2,25$, de préférence $2,0 \leq x \leq 2,2$.

9. Polychlorure ou polychlorosulfate d'aluminium selon l'une des revendications 1 à 8 caractérisé en ce que, dans la formule (1), t est tel que $0,300 \leq t \leq 0,500$, de préférence $0,400 \leq t \leq 0,495$.

10. Polychlorure d'aluminium selon l'une des revendications 1 à 9, caractérisé en ce que, dans la formule (1), z = 0.

11. Polychlorosulfate d'aluminium selon l'une des revendications 1 à 9, caractérisé en ce que, dans la formule (1), z est tel que $0,020 \leq z \leq 0,045$, de préférence $0,025 \leq z \leq 0,040$.

12. Procédé de préparation d'un polychlorure ou polychlorosulfate d'aluminium selon l'une des revendications 1 à 11, du type comprenant la réaction, à une température inférieure à 40 °C, d'un composé d'un métal alcalino-terreux ou alcalin M avec un polychlorure ou polychlorosulfate d'aluminium répondant à la formule (2) suivante :

$$Al(OH)_uCl_v(SO_4)_w \qquad (2)$$

formule (2) dans laquelle u, v et w sont des nombres réels tels que :

$0,85 \leq u \leq 1,50$,
$0 \leq w \leq 0,06$, et
$u + v + 2w = 3$.

13. Procédé selon la revendication 12, caractérisé en ce que la proportion M/Al, calculée en équivalents moléculaires, est telle que :

$0,10 \leq M/Al \leq 0,60$, de préférence $0,200 \leq M/Al \leq 0,515$, si M représente un métal alcalino-terreux,
$0,20 \leq M/Al \leq 1,20$, de préférence $0,40 \leq M/Al \leq 1,03$, si M représente un métal alcalin.

14. Procédé selon l'une des revendications 12 à 13, caractérisé en ce que ladite température est d'au plus 35 °C, de préférence d'au plus 30 °C.

**15.** Procédé selon l'une des revendications 12 à 14, caractérisé en ce que le polychlorure ou polychlorosulfate d'aluminium de formule (2) est, préalablement à la réaction avec le composé de métal alcalin-terreux ou alcalin M, mélangé à de l'eau.

**16.** Procédé selon l'une des revendications 12 à 15, caractérisé en ce que le composé de métal alcalino-terreux ou alcalin M est ajouté au polychlorure ou polychlorosulfate d'aluminium de formule (2) pendant une durée comprise entre 10 minutes et 2 heures, de préférence entre 15 et 40 minutes.

**17.** Procédé selon l'une des revendications 12 à 16, caractérisé en ce que, après l'addition du composé de métal alcalino-terreux ou alcalin M au polychlorure ou polychlorosulfate d'aluminium de formule (2), on laisse mûrir le produit obtenu, sous agitation, pendant une durée comprise entre 2 et 8 heures, de préférence entre 3 et 5 heures.

**18.** Procédé selon l'une des revendications 12 à 18, caractérisé en ce que M représente un métal alcalino-terreux, de préférence le calcium.

**19.** Procédé selon la revendication 18, caractérisé en ce que ledit composé de métal alcalino-terreux M est $CaCO_3$, de préférence sous forme solide.

**20.** Procédé selon l'une des revendications 12 à 19, caractérisé en ce que le polychlorure ou polychlorosulfate d'aluminium de formule (2) présente une basicité comprise entre 30 et 50 %, en particulier entre 35 et 50 %.

**21.** Procédé selon l'une des revendications 12 à 20, caractérisé en ce que le polychlorure ou polychlorosulfate d'aluminium de formule (2) présente une teneur pondérale en aluminium, exprimée en $Al_2O_3$, comprise entre 10 et 25 %, de préférence entre 10 et 20%.

**22.** Procédé selon l'une des revendications 12 à 21, caractérisé en ce que, dans la formule (2), u est tel que $0,9 \leq u \leq 1,4$.

**23.** Procédé selon l'une des revendications 12 à 22, caractérisé en ce que, dans la formule (2), w = 0.

**24.** Procédé selon l'une des revendications 12 à 22, caractérisé en ce que, dans la formule (2), w est tel que $0,020 \leq w \leq 0,045$.

**25.** Procédé selon l'une des revendications 12 à 24, caractérisé en ce qu'il comprend une étape finale de filtration.

**26.** Procédé selon l'une des revendications 12 à 25, caractérisé en ce que le polychlorure ou polychlorosulfate d'aluminium de formule (2) est utilisé sous forme d'une solution, le solvant étant de préférence de l'eau.

**27.** Procédé selon l'une des revendications 12 à 26, caractérisé en ce que le polychlorure ou polychlorosulfate d'aluminium de formule (2) est obtenu sans utilisation d'un ou plusieurs composés de métal alcalino-terreux ou alcalin.

**28.** Application d'un polychlorure ou polychlorosulfate selon l'une des revendications 1 à 11 ou préparé par le procédé selon l'une des revendications 12 à 27 au traitement d'un milieu aqueux, notamment d'une eau ou d'un effluent aqueux.

**29.** Application selon la revendication 28 au traitement des eaux potables.

**Claims**

**1.** An aluminium polychloride or polychlorosulphate with formula (1) as follows:

$$Al(OH)_xCl_y(SO_4)_zM_t \qquad (1)$$

in which formula (1):

M represents an alkaline-earth or alkali metal;
x, y and z are real numbers such that:
$1.80 \leq x \leq 2.30$
$0 \leq z \leq 0.050$;
$0.200 \leq t \leq 0.515$; and
$x + y + 2z = 3 + 2t$ if M represents an alkaline-earth metal or $x + y + 2z = 3 + t$ if M represents an alkali metal;

the $^{27}$Al aluminium NMR spectrum of said polychloride or polychlorosulphate containing a signal at about $\delta = -6$ ppm.

**2.** An aluminium polychloride or polychlorosulphate according to claim 1, characterized in that with no ageing, it has a molar proportion of aluminium in the Al-13 form for a concentration of aluminium of 0.06 mol/l of at least 25%, preferably at least 30%.

**3.** An aluminium polychloride or polychlorosulphate according to claim 1 or claim 2, characterized in that after ageing for 150 hours, it has a molar proportion of aluminium in the Al-13 form for a concentration of aluminium of 0.06 mol/l of at least 50%, preferably at least 60%.

**4.** An aluminium polychloride or polychlorosulphate according to any one of claims 1 to 3, characterized in that its basicity is more than 63%, preferably at

**5.** An aluminium polychloride or polychlorosulphate according to any one of claims 1 to 4, characterized in that its aluminium content, expressed as $Al_2O_3$, is in the range 5% to 20% by weight, in particular in the range 5% to 15% by weight.

**6.** An aluminium polychloride or polychlorosulphate according to any one of claims 1 to 5, characterized in that it is in the form of a solution, the solvent preferably being water.

**7.** An aluminium polychloride or polychlorosulphate according to any one of claims 1 to 6, characterized in that M represents an alkaline-earth metal, preferably calcium.

**8.** An aluminium polychloride or polychlorosulphate according to any one of claims 1 to 7, characterized in that in formula (1), x is such that $1.90 \leq x \leq 2.25$, preferably $2.0 \leq x \leq 2.2$.

**9.** An aluminium polychloride or polychlorosulphate according to any one of claims 1 to 8, characterized in that in formula (1), t is such that $0.300 \leq t \leq 0.500$, preferably $0.400 \leq t \leq 0.495$.

**10.** An aluminium polychloride or polychlorosulphate according to any one of claims 1 to 9, characterized in that in formula (1), z = 0.

**11.** An aluminium polychloride or polychlorosulphate according to any one of claims 1 to 9, characterized in that in formula (1), z is such that $0.020 \leq z \leq 0.045$, preferably $0.025 \leq z \leq 0.040$.

**12.** A process for preparing an aluminium polychloride or polychlorosulphate according to any one of claims 1 to 11, of the type comprising reacting, at a temperature of less than 40°C, a compound of an alkaline-earth metal or alkali metal M with an aluminium polychloride or polychlorosulphate with the following formula (2):

$$Al(OH)_u Cl_v (SO_4)_w \qquad (2)$$

in which formula (2) u, v and w are real numbers such that:

$0.85 \leq u \leq 1.50$;
$0 \leq w \leq 0.06$; and
$u + v + 2w = 3$.

**13.** A process according to claim 12, characterized in that the proportion M/Al, calculated in molecular equivalents, is such that:

$0.10 \leq M/Al \leq 0.60$, preferably $0.200 \leq M/Al \leq 0.515$, when M represents an alkaline-earth metal;
$0.20 \leq M/Al \leq 1.20$, preferably $0.40 \leq M/Al \leq 1.03$, when M represents an alkali metal.

**14.** A process according to claim 12 or claim 13, characterized in that said temperature is at most 35°C, preferably at most 30°C.

**15.** A process according to any one of claims 12 to 14, characterized in that the aluminium polychloride or polychlorosulphate with formula (2) is mixed with water prior to reaction with the alkaline-earth metal or alkali metal M compound.

**16.** A process according to any one of claims 12 to 15, characterized in that the alkaline-earth metal or alkali metal M compound is added to the aluminium polychloride or polychlorosulphate with formula (2) over a period in the range 10 minutes to 2 hours, preferably in the range 15 to 40 minutes.

**17.** A process according to any one of claims 12 to 16, characterized in that, after adding the alkaline-earth metal or alkali metal M compound to the aluminium polychloride or polychlorosulphate with formula (2), the product obtained is allowed to age, with stirring, for a period in the range 2 to 8 hours, preferably in the range 3 to 5 hours.

**18.** A process according to any one of claims 12 to 18, characterized in that M represents an alkaline-earth metal, preferably calcium.

**19.** A process according to claim 18, characterized in that said alkaline-earth metal M compound is $CaCO_3$, preferably in its solid form.

**20.** A process according to any one of claims 12 to 19, characterized in that the basicity of the aluminium polychloride or polychlorosulphate with formula (2) is in the range 30% to 50%, in particular in the range 35% to 50%.

**21.** A process according to any one of claims 12 o 20, characterized in that the aluminium content in the aluminium polychloride or polychlorosulphate with formula (2), expressed as $Al_2O_3$, is in the range 10% to 25%, preferably in the range 10% to 20%.

**22.** A process according to any one of claims 12 to 21, characterized in that, in formula (2), u is such that $0.9 \leq u \leq 1.4$.

**23.** A process according to any one of claims 12 to 22, characterized in that, in formula (2), w = 0.

**24.** A process according to any one of claims 12 to 22, characterized in that, in formula (2), w is such that $0.020 \leq w \leq 0.045$.

**25.** A process according to any one of claims 12 to 24, characterized in that it comprises a final filtration step.

**26.** A process according to any one of claims 12 to 25, characterized in that the aluminium polychloride or polychlorosulphate with formula (2) is used in the form of a solution, the solvent preferably being water.

**27.** A process according to any one of claims 12 to 26, characterized in that the aluminium polychloride or polychlorosulphate with formula (2) is obtained without using one or more compounds of an alkaline-earth metal or an alkali metal.

**28.** Application of a polychloride or polychlorosulphate according to any one of claims 1 to 11 or prepared by the process of any one of claims 12 to 27 to the treatment of an aqueous medium, in particular water or an aqueous effluent.

**29.** Application according to claim 28 to the treatment of drinking water.

**Patentansprüche**

**1.** Aluminiumpolychlorid oder -polychlorsulfat der folgenden Formel (I)

$$Al(OH)_xCl_y(SO_4)_zM_t \qquad (1)$$

worin:

M ein Erdalkali- oder Alkalimetall bedeutet,
x, y, z und t reelle Zahlen sind, wie:
$1,80 \leq x \leq 2,30$,
$0 \leq z \leq 0,050$,
$0,200 \leq t \leq 0,515$ und
$x + y + 2z = 3 + 2t$, wenn M ein Erdalkalimetall bedeutet oder $x+y+2z=3+t$, wenn M ein Alkalimetall bedeutet,

wobei das NMR-Spektrum von Aluminium $^{27}Al$ des Polychlorids oder Polychlorsulfats ein Signal bei etwa $\delta = -6$ ppm enthält.

**2.** Aluminiumpolychlorld oder -polychlorsulfat nach Anspruch 1, dadurch **gekennzeichnet,** dass es ohne Alterung einen molaren Anteil an Aluminium in Form von Al-13 auf eine Konzentration an Aluminium von 0,06 mol/l von mindestens 25%, bevorzugt von mindestens 30%, enthält.

**3.** Aluminiumpolychlorid oder -polychlorsulfat nach einem der Ansprüche 1 und 2, dadurch **gekennzeichnet,** dass es nach Alterung von 150 Stunden einen molaren Anteil an Aluminium in Form von Al-13 auf eine Konzentration an Aluminium von 0,06 mol/l von mindestens 50%, bevorzugt mindestens 60%, enthält.

**4.** Aluminiumpolychlorid oder -polychlorsulfat nach einem der Ansprüche 1 bis 3, dadurch **gekennzeichnet,** dass es eine Basizität von grösser als 63%, bevorzugt von mindestens 70%, besitzt.

**5.** Aluminiumpolychlorid oder -polychlorsulfat nach einem der Ansprüche 1 bis 4, dadurch **gekennzeichnet,** dass es einen Gewichtsanteil an Aluminium, ausgedruckt als $Al_2O_3$, zwischen 5 und 20%, insbesondere zwischen 5 und 15%, besitzt.

**6.** Aluminiumpolychlorid oder -polychlorsulfat nach einem der Ansprüche 1 bis 5, dadurch **gekennzeichnet,** dass es in Form einer Lösung vorliegt, wobei das Lösungsmittel bevorzugt Wasser ist.

**7.** Aluminiumpolychlorid oder -polychlorsulfat nach einem der Ansprüche 1 bis 6, dadurch **gekennzeichnet,** dass M ein Erdalkalimetall, bevorzugt Calcium, bedeutet.

**8.** Aluminiumpolychlorid oder -polychlorsulfat nach einem der Ansprüche 1 bis 7, dadurch **gekennzeichnet,** dass in Formel (1) x wie durch $1,90 \leq x \leq 2,25$, bevorzugt $2,0 \leq x \leq 2,2$, definiert ist.

**9.** Aluminiumpolychlorid oder -polychlorsulfat nach einem der Ansprüche 1 bis 8, dadurch **gekennzeichnet,** dass in der Formel (1) t wie durch $0,300 \leq t \leq 0,500$, bevorzugt $0,400 \leq t \leq 0,495$, definiert ist.

**10.** Aluminiumpolychlorid nach einem der Ansprüche 1 bis 9, dadurch **gekennzeichnet,** dass in Formel (1) $z = 0$.

**11.** Aluminiumpolychlorsulfat nach einem der Ansprüche 1 bis 9, dadurch **gekennzeichnet,** dass in Formel (1) z wie durch $0,020 \leq z \leq 0,045$, bevorzugt $0,025 \leq z \leq 0,040$, definiert ist.

**12.** Verfahren zur Herstellung eines Aluminiumpolychlorids oder -polychlorsulfats nach einem der Ansprüche 1 bis 11, dadurch **gekennzeichnet,** dass man bei einer Temperatur unter 40°C eine Verbindung eines Erdalkali- oder Alkalimetalls M mit einem Aluminiumpolychlorid oder - poly-chlorsulfat der folgenden Formel (2):

$$Al(OH)_uCl_v(SO_4)_w \qquad (2)$$

umsetzt, wobei in Formel (2) u, v und w reelle Zahlen, wie durch

$$0{,}85 \leq u \leq 1{,}50,$$
$$0 \leq w \leq 0{,}06 \text{ und}$$
$$u + v + 2w = 3$$

definiert sind.

13. Verfahren nach Anspruch 12, dadurch **gekennzeichnet,** dass das Verhältnis M/Al, das in Moleküläquivalenten berechnet ist, wie folgt definiert ist:

$$0{,}10 \leq M/Al \leq 0{,}60, \text{ bevorzugt } 0{,}200 \leq M/Al \leq 0{,}515, \text{ wenn M ein Erdalkalimetall bedeutet,}$$

$$0{,}20 \leq M/Al \leq 1{,}20, \text{ bevorzugt } 0{,}40 \leq M/Al \leq 1{,}03, \text{ wenn M ein Alkalimetall bedeutet.}$$

14. Verfahren nach einem der Ansprüche 12 bis 13, dadurch **gekennzeichnet,** dass die Temperatur höchstens 35°C, bevorzugt höchstens 30°C, beträgt.

15. Verfahren nach einem der Ansprüche 12 bis 14, dadurch **gekennzeichnet,** dass das Aluminiumpolychlorid oder -polychlorsulfat der Formel (2) vor der Umsetzung mit der Verbindung des Erdalkali- oder Alkalimetalls M mit Wasser vermischt wird.

16. Verfahren nach einem der Ansprüche 12 bis 15, dadurch **gekennzeichnet,** dass die Verbindung des Erdalkali- oder Alkalimetalls M dem Aluminiumpolychlorid oder -polychlorsulfat der Formel (2) während einer Dauer zwischen 10 Minuten und 2 Stunden, bevorzugt zwischen 15 und 40 Minuten, zugesetzt wird.

17. Verfahren nach einem der Ansprüche 12 bis 16, dadurch **gekennzeichnet,** dass man nach der Zugabe der Verbindung des Erdalkali- oder Alkalimetalls M zu dem Aluminiumpolychlorid oder -polychlorsulfat der Formel (2) das so erhaltene Produkt unter Rühren während einer Dauer zwischen 2 und 8 Stunden, bevorzugt zwischen 3 und 5 Stunden, reifen lässt.

18. Verfahren nach einer der Ansprüche 12 bis 18, dadurch **gekennzeichnet,** dass M ein Erdalkalimetall, bevorzugt Calcium, bedeutet.

19. Verfahren nach Anspruch 18, dadurch **gekennzeichnet,** dass die Verbindung des Erdalkalimetalls M $CaCO_3$, bevorzugt in Form eines Feststoffs, ist.

20. Verfahren nach einem der Ansprüche 12 bis 19, dadurch **gekennzeichnet,** dass das Aluminiumpolychlorid oder -polychlorsulfat der Formel (2) eine Basizitat zwischen 30 und 50%, bevorzugt zwischen 35 und 50%, besitzt.

21. Verfahren nach einem der Ansprüche 12 bis 20, dadurch **gekennzeichnet,** dass das Aluminiumpolychlorid oder -polychlorsulfat der Formel (2) einen Gewichtsanteil an Aluminium, ausgedrückt als $Al_2O_3$, zwischen 10 und 25%, bevorzugt zwischen 10 und 20%, besitzt.

22. Verfahren nach einem der Ansprüche 12 bis 21, dadurch **gekennzeichnet,** dass in der Formel (2) u wie durch $0{,}9 \leq u \leq 1{,}4$ definiert ist.

23. Verfahren nach einem der Ansprüche 12 bis 22, dadurch **gekennzeichnet,** dass in der Formel (2) w = 0.

24. Verfahren nach einem der Ansprüche 12 bis 22, dadurch **gekennzeichnet,** dass in der Formel (2) w wie durch $0{,}020 \leq w \leq 0{,}045$ definiert ist.

25. Verfahren nach einem der Ansprüche 12 bis 24, dadurch **gekennzeichnet,** dass es eine Endstufe der Filtration umfasst.

26. Verfahren nach einem der Ansprüche 12 bis 25, dadurch **gekennzeichnet,** dass das Aluminiumpolychlorid oder -polychlorsulfat der Formel (2) in Form einer Lösung verwendet wird, wobei das Lösungsmittel bevorzugt Wasser ist.

27. Verfahren nach einem der Ansprüche 12 bis 26, dadurch **gekennzeichnet,** dass das Aluminiumpolychlorid oder -polychlorsulfat der Formel (2) ohne Verwendung einer oder mehrerer Erdalkali- oder Alkalimetallverbindungen erhalten wird.

28. Verwendung eines Polychlorids oder Polychlorsulfats nach einem der Ansprüche 1 bis 11 oder hergestellt nach dem Verfahren nach einem der Ansprüche 12 bis 27 zur Behandlung eines wässrigen Mediums, insbesondere eines Wassers oder eines wässrigen Effluenten.

29. Verwendung nach Anspruch 28 zur Behandlung von Trinkwässern.